# EUROPEAN PATENT APPLICATION

(11) **EP 0 849 960 A1**
(43) Date of publication of application: **24.06.1998**
(21) Application number: 97850174.0
(22) Date of filing: 16.12.1997
(51) Int. Cl.: H04Q 3/00, H04M 3/42

(54) **Method and device in telecommunications network**

(30) Priority: 19.12.1996 SE 9604696
(71) Applicant: TELEFONAKTIEBOLAGET LM ERICSSON, 126 25 Stockholm (SE)
(72) Inventor: Hultgren, Anders, 182 34 Danderyd (SE)
(74) Representative: Kierkegaard, Lars-Olov

(57) **Abstract**

The present invention concerns a method and an apparatus for designing, providing and managing customer services in a telecommunications network. The services are handled in a separate service network, connected to the telecommunications network in a logical service means, for example an SCP in an intelligent network. The service network is based on existing and commonly available network resources, for example, a cable TV network. Also, existing and commonly available terminals, such as television sets are used for handling the services.

## Description

### TECHNICAL FIELD OF THE INVENTION

The present invention relates to telecommunications networks, and more specifically to the design, deployment, management and execution of services in such networks.

### DESCRIPTION OF RELATED ART

Today, a subscriber can manage such services in two ways: by calling an operator and asking for the service to be activated or deactivated or by pressing a combination of keys on the telephone. Both these ways are perceived as cumbersome by many subscribers. The key combinations are often long and hard to remember, and the lack of guidance to the subscriber causes mistakes or scares the subscriber from even trying. The complexity of the user interface also limits the number and flexibility of the services that can effectively be used.

Universal Personal Telecommunication (UPT) is a concept for assigning a personal telephone number to each individual through which a person can always be reached regardless of his or her location. Logic functions in the network direct any incoming call to a telephone where the subscriber is currently found. The service works between different types of network, such as the Public Services Telephone Network (PSTN) and mobile networks. UPT is normally implemented in an intelligent network, but may be implemented in any kind of telecommunications network.

Other examples of services preferably implemented in an Intelligent Network (IN) are call forwarding, call waiting and screening of calls.

There is no standard for the design, management and execution of services in intelligent networks or other telecommunications networks today. Therefore, such services are based on proprietary solutions or on programming languages that have to be compiled directly for one host computer. Therefore they cannot be moved between different kinds of equipment. There is no standard programming language, no standard format for transferring service logic to the SCPs and no standard interface for managing services. All these factors for design, deployment and management of services in an intelligent network also depend on the service vendor.

This creates a number of problems for the telecommunications operators and for the subscribers:
Because many solutions are proprietary, the codes for activating or changing services may vary between different vendors' equipment. Also, it is difficult for the telecommunications operator to combine equipment from different vendors.

As the environments are so specialized, it is difficult to modify services. With the priorly known solutions, it is impossible for a subscriber to design or modify his/her own services.

The service mobility is poor. Automatic activation of services must generally be done from the subscriber's own phone.

The service profile of a particular subscriber cannot be moved to another operator if the subscriber wants to change.

WO 95/34980 describes a customized telecommunications service where a service provider or a system vendor can provide and modify services tailored according to the customers' needs and wishes. The network comprises a number of service shells, each relating to a particular service. A service shell contains basic logic for the shell and customization points in which services may be added by a system vendor or modified by a service provider. The subscriber is able to fine-tune the service for his or her own purposes. ISDN is suggested as a network for the input of user data.

US 5,323,452 discloses a system and method for creating and modifying intelligent network call processing in a visual environment. No network solution is suggested.

Thus, there is a need for a network solution for the design, deployment, management and execution of services. To be useful to as many people as possible the network and the cost for connecting must be kept as low as possible. One way of achieving this is to use existing network resources and terminals where possible.

### OBJECTS OF THE INVENTION

It is therefore an object of the invention to provide a method for service management in a telecommunications network which to as great an extent as possible uses existing network resources and terminals.

It is also an object of the invention to provide a method and a network in which it is easy to design, deploy, manage and execute services for subscribers in a telecommunications network.

It is another object of the invention to create a service network which is flexible, yet easy to manage for a subscriber.

It is another object of the invention to obtain a standard for creating service programs which can be executed on different types of equipment.

It is still another object of the invention enable management of services independently of the subscriber's physical location;

It is yet another object of the invention to achieve service portability, including enabling a customer to move his or her services to another operator.

### SUMMARY OF THE INVENTION

Some of these objects are achieved in a telecommunications network designed as disclosed in the independent claims. The remaining objects are achieved in certain embodiments of the invention as disclosed in the dependent claims.

The invention offers the following advantages:

All services can be handled in the same way via the same interface.
The risk of errors when modifying services is reduced as the customer can see the results of the changes while they are being made.
The customers can use existing equipment for communicating with the network. Existing network resources can be used for the service network.
State of the art development environments can be used for creation of services. The downloading of services is made more efficient.
Services can be managed by the subscriber independently of his or her location. A subscriber's service profile and services can be moved between operators.

### BRIEF DESCRIPTION OF THE DRAWINGS

The invention will be further discussed below with particular reference to the enclosed drawings, in which:
Figure 1 shows schematically a general concept for intelligent telecommunications networks (IN) according to the invention;
Figure 2 shows an intelligent telecommunications network according to a preferred embodiment of the invention;
Figure 3 shows the actions taken by the subscriber and by the system when a service is to be activated, deactivated or changed according to the preferred embodiment of the invention.
Figure 4 shows the steps taken when a service is executed (used) according to an embodiment of the invention;

### DETAILED DESCRIPTION OF THE EMBODIMENTS

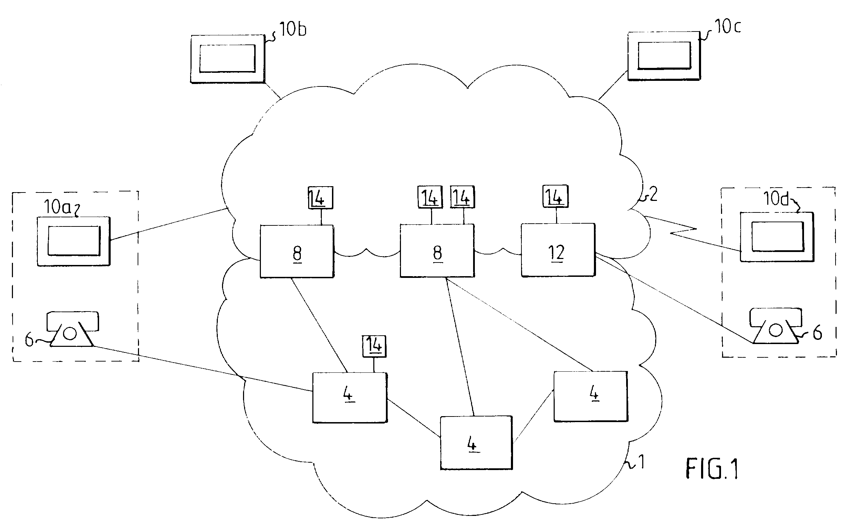

An intelligent network according to the invention is shown in figure 1. The network is divided into two main parts. The actual calls are made, and the services are used, in the telecommunications network 1. The service network 2 is used for creating, downloading and managing the services offered by the IN. The telecommunications network 1 is made up of a number of SSPs (Service Switching Points) 4 to which telephones 6 and other telecommunications equipment such as telefaxes may be connected. The SSPs are connected to one or more SCPs (Service Control Points) 8 which contain the control logic and service software of the network. One or more intelligent peripheries may be connected to the SSPs and the SCPs for providing databases, reference information etc.

The service network consists of a number of terminals 10a, 10b, 10c, 10d which are connected to the SCPs, either via a wire or cable link as illustrated for 10b or via a radio link as illustrated for 10d. Each subscriber may have a terminal 10a, 10d, and service providers and operators may have terminals 10b, 10c. The subscribers' terminals 10a, 10d are used by the subscribers to modify, activate or deactivate services in the telecommunications network 1.

To get access to the service management interfaces, user identification is required. A user profile may be defined for each user, to give the user access to the functions he or she should be allowed to perform. For example, service vendors 10b and operators 10c may be allowed to download programs to the network 2. Some subscribers 10a, 10d may be allowed to manage all kinds of services and others may have access only to certain services. Some subscribers may be allowed to modify services.

In a preferred embodiment of the invention, the subscribers' terminals 10a are television sets, and the services are managed from an ordinary Text-TV page.

As shown in figure 1, the switching and logic functions performed by the SSPs and SCPs in the network may be combined in one unit called a Service Switching and Control Point, SSCP 12. One or more SSCPs could be provided together with one or more combinations of SSPs and SCPs in the network.

If voice prompting of subscriber actions is to be used, at least one Intelligent Periphery (IP) 14 containing the voice message must be used in connection with an SSP, an SCP or an SSCP.

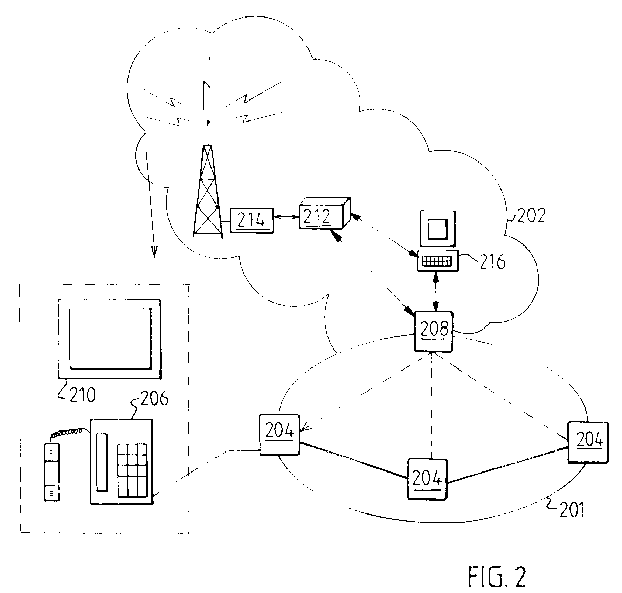

Figure 2 shows the intelligent network with a telecommunications part 201 and a service part 202 according to a preferred embodiment of the invention. The telecommunications part 201 is similar to that of the first embodiment, with SSPs 204 to which subscribers' telephony equipment, such as telephones 206, is connected. The SSPs 204 are connected to one or more SCPs 208. To each SCP 208 one or more subscriber service profile servers 212 in the service network 202 may be connected. When present, the subscriber profile server 212 keeps track of all service data for all subscribers, such as activation and deactivation times and other service parameters. Otherwise, these functions may be performed for example in the SCP 208.

In the service network part 202, the subscribers' television sets 210 are used for presenting the graphical user interface to the subscriber, and the telephones 206 are used to communicate with the SCP 208. Therefore, a text-TV broadcast insertion system 214 for transmitting information to the subscribers' television sets 210 is connected to the service profile server 212.

Between each SCP 208 and the subscriber service profile server 212 a Service Management System (SMS) 216 may be connected. In this case, the SMS handles the communication with the broadcast system 214. If the service network 202 does not contain an SMS, the communication with the broadcast system 214 is handled by the SSP 204 or SCP 208 in the telecommunications part.

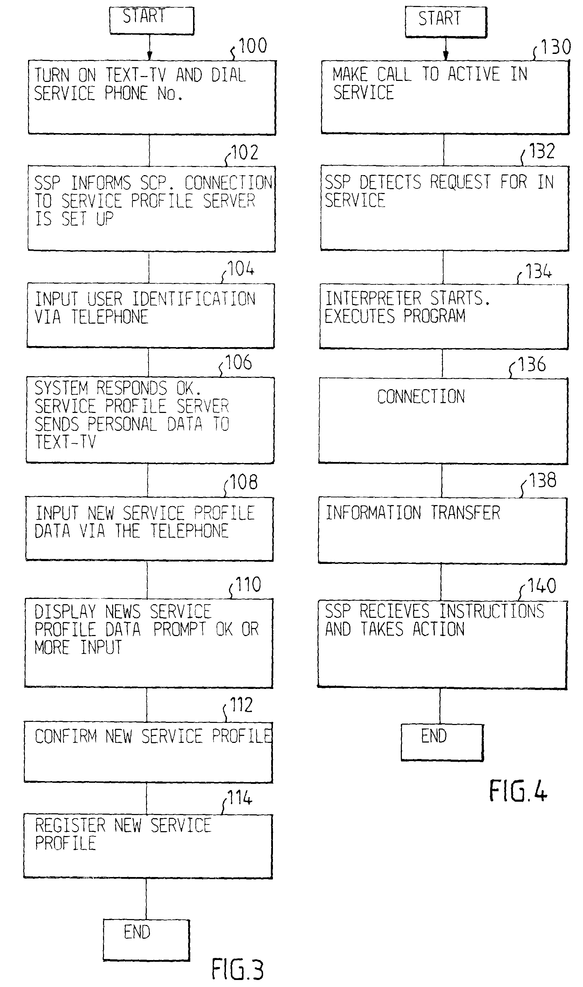

Figure 3 shows the actions taken when a service is to be activated, deactivated or changed according to the preferred embodiment of the invention.
Step 100: The subscriber turns on the Text TV function on the television set 210 and dials a service telephone number from a telephone 206.
Step 102: The SSP 204 informs the SCP 208 that a service handling call has been received. A connection to the service profile server is set up either from the SSP 204 or from the SMS 216 or from the SCP 208.
Step 104: The user enters identification data, which for example may be a password or some kind of oral identification and the telephone number for which the services are to be changed.
Step 106: The system signals to the subscriber that the identification was OK and that the system is ready to receive data about the subscriber services. The information may be given over the telephone or on the screen.
Step 108: The subscriber enters the new service profile data via the telephone. Data may be input by dialling numbers or letters or, possibly, by oral instructions.
Step 110: The new service profile data is transmitted through the service network and displayed on the subscriber's Text TV. The system prompts the subscriber to give further input or to confirm the new service profile data.
Step 112: When all desired changes have been made, the subscriber confirms the new service profile data. This may be done by dialling or by oral instructions, for example by uttering a certain word to confirm the changes and another word to cancel the changes.
Step 114: The new service profile is registered in the SCP 208 and in the Service Profile Server 212 and the SMS, if available.

If oral identification and/or instructions are used in step 104, step 108 and/or step 112, the network must contain a database with voice samples of all subscribers who are to use the service and voice recognition means to compare the voice sample requesting identification against the voice samples in the database. The database and voice recognition means are normally found in, or in connection to an, intelligent periphery 14.

Figure 4 shows the steps taken when a service is to be executed according to an embodiment of the invention.
- Step 130:: A subscriber makes a call.
- Step 132:: The SSP 204 identifies a request for an IN service concerning the call and initiates the execution of the service execution program in the SCP 208.
- Step 134:: The SCP 208 executes the program.
- Step 136:: The connection is established.
- Step 138:: The information is transferred to the SSP 204.
- Step 140:: The SSP 204 receives instructions and performs the selected service for the call.

Although in most of the description above, terminology relating to intelligent networks is used, it will be understood that the logical function of the components in the network (e.g. SSP, SCP, SMS) could be implemented in other components in any telecommunications network.

## Claims

1. Method for designing and/or providing and/or managing subscriber services in a telecommunications network, where services are stored in connection to at least one logical service means (8; 12; 208) connected to or integrated in at least one exchange (4; 12; 204), comprising the steps of:
- Using an existing and commonly available network as a service network (2; 202);
- Connecting the service network (2; 202) to the telecommunications network via said at least one logical service means;
- Using commonly available terminals as subscribers' terminals (10a, 10d; 206, 210) in the service network;
- Connecting a graphical user interface means from the service network to the subscriber;
- Managing services at the logical service means (8, 12; 208) through the graphical user interface in the service network, **characterized** by displaying the user profile information for the subscriber concerned on a television screen (210),
- Using a telephone (206) to transmit data from the subscriber to the logical service means.

2. Method according to claim 1, **characterized** in that the telecommunications network is an intelligent network, and that the logical service means are Service Control Points (SCP) (8; 208) or Service Switching and Control Points (SSCP) (12).

3. A telecommunications network in which subscriber services can be designed and/or provided and/or managed, comprising
- a telecommunications network (1; 201) in which calls are made and the services are used;
- a service network (2; 202) comprising an existing and commonly available network, for instance a text-TV broadcast insertion system or the like;
- at least one logical service means (8, 12; 208) connecting the service network to the telecommunications network;
- a graphical user interface (10a, 10d, 206, 210), known per se, on which the subscriber service data is displayed, **characterized** in that a television set is used to display the subscriber's service profile data to the subscriber, and
that the subscriber can use a telephone to transmit data to the logical service means.

4. Telecommunications network according to claim 3, **characterized** in that it comprises service and Control Switching Points (SSCP) and/or Service Switching Points (SSP), and that the logical service means are Service Control Points (SCP) or SSCPs.
